# EUROPEAN PATENT APPLICATION

(11) **EP 4 503 280 A1**
(43) Date of publication of application: **05.02.2025**
(21) Application number: 22933638.3
(22) Date of filing: 01.12.2022
(51) Int. Cl.: H01M 50/204, H01M 50/224, H01M 50/249, H01M 50/262, H01M 50/291

(54) **BATTERY PACK AND BATTERY ASSEMBLY**

(30) Priority: 25.03.2022 JP 2022050719
(71) Applicant: Vehicle Energy Japan Inc., Ibaraki 312-8505 (JP); Nissan Motor Co., Ltd., Atsugi-shi, Kanagawa 243-0123 (JP)
(72) Inventor: TSUNAKI, Takuro, Hitachinaka-shi, Ibaraki 312-8505 (JP); KAWASAKI, Tatsuhiko, Hitachinaka-shi, Ibaraki 312-8505 (JP); KAMADA, Tatsuya, Hitachinaka-shi, Ibaraki 312-8505 (JP); YABUKI, Ryosuke, Hitachinaka-shi, Ibaraki 312-8505 (JP); IKEZOE, Fumitaka, Atsugi-shi, Kanagawa 243-0123 (JP); SAKURAI, Hiroshi, Atsugi-shi, Kanagawa 243-0123 (JP)
(74) Representative: MERH-IP Matias Erny Reichl Hoffmann Patentanwälte PartG mbB
(86) International application number: PCT/JP2022/044408
(87) International publication number: WO 2023/181508

(57) **Abstract**

Provided are an on-vehicle battery pack and a battery assembly having high safety regardless of a use environment. Provided is a battery pack in which a battery assembly is housed in a battery housing made of a metal, in which, when three coordinate axis directions in a three-dimensional orthogonal coordinate system are defined as an up-down direction, a lamination direction of the battery assembly, and a width direction of the battery assembly, respectively, a bottom portion of the battery housing includes: first fixing portions that are disposed in a region of an inner surface of the bottom portion, the region facing a lower surface of the battery assembly, and that fix the battery assembly upward, a partitioning portion that partitions the inner surface of the bottom portion into a plurality of regions, and an insulating portion that insulates at least a region on a central side of the bottom portion among the plurality of partitioned regions, the battery assembly includes: a laminated body which is formed by alternately laminating secondary batteries and spacers such that the secondary batteries are located at both ends thereof, and end spacers disposed at both the ends of the laminated body respectively, second fixing portions for fixing the battery assembly downward are provided on the lower surface of the battery assembly in the vicinity of both the ends of the battery assembly, the first fixing portions and the second fixing portions are provided to face each other so as to be coaxial, a bottom portion of the spacer extends in the lamination direction of the battery assembly so as to cover a lower surface of one of adjacent secondary batteries, the spacer and the end spacer have the following (1) or (2): (1) a bottom portion of the end spacer extends in the lamination direction of the battery assembly so as to further cover a lower surface of the bottom portion of the spacer, and an upper surface of the bottom portion of the end spacer and the lower surface of the bottom portion of the spacer face each other in the up-down direction, and (2) the bottom portion of the end spacer extends in the lamination direction of the battery assembly so as to cover a lower surface of one of adjacent secondary batteries, the bottom portion of the spacer extends in the lamination direction of the battery assembly so as to further cover the lower surface of the bottom portion of the end spacer, and the upper surface of the bottom portion of the spacer and the lower surface of the bottom portion of the end spacer face each other in the up-down direction, a protrusion protruding toward a central side of the lower surface of the battery assembly is formed on the bottom portion of the end spacer in the lamination direction of the battery assembly, and a distal end of the protrusion is disposed closer to the central side of the lower surface of the battery assembly than an installation site of the partitioning portion in the lamination direction of the battery assembly.

## Description

### Technical Field

The present invention relates to an on-vehicle battery pack and a battery assembly incorporated in the battery pack.

### Background Art

Many electric vehicles such as a battery electric vehicle (BEV) or a plug-in hybrid electric vehicle (PHEV), a hybrid electric vehicle (HEV), and the like are equipped with a secondary battery as a power supply source that supplies necessary electric power to a motor. Specific examples of the on-vehicle secondary battery include a lithium ion battery, a sodium ion battery, and various all-solid-state batteries.

The traveling performance of the electric vehicle such as a driving force and a cruising distance depends on the capacity of the secondary battery mounted as the power supply source. That is, in order for the various electric vehicles described above to obtain good traveling performance, it is essential to mount a high-capacity secondary battery. However, in a case where the above-described various secondary batteries are used as the power supply sources, it is difficult to obtain a high-capacity on-vehicle secondary battery due to an increase in size of the battery in terms of battery life, safety, and the like. Therefore, when the above-described various secondary batteries are used as the power supply sources of the electric vehicle, a plurality of batteries are usually bundled to form a battery assembly. Regarding such a battery assembly, for example, a technique described in Patent Literature 1 is known.

### Citation List

### Patent Literature

Patent Literature 1: JP 2015-220218 A

### Summary of Invention

### Technical Problem

In general, the battery assembly has an exoskeleton structure in which a plurality of laminated batteries are supported by a support made of a metal. Further, this battery assembly is mounted on a vehicle in a state of being housed in a battery housing made of a metal in order to sufficiently obtain rigidity and vibration absorbability. At this time, the battery assembly is normally assembled to the battery housing with various fixing members made of a metal such as bolts and washers and fixed in the battery housing.

Incidentally, the various electric vehicles described above can be used under various environments. For example, when these electric vehicles are used in an environment where a temperature difference between an inside and an outside of the vehicle is large or in a wet environment, water vapor in the air condenses and adheres to a surface of a metal or a member made of a resin such as the battery housing or the support, and dew condensation may occur. Here, the battery assembly and the battery housing do not normally come into direct contact with each other because, for example, an insulating member made of a resin is interposed therebetween. However, the battery assembly and the battery housing are fixed to each other by a fixing member made of a metal having conductivity. Therefore, when a water droplet attached to the surface of the metal or the member made of a resin such as the battery housing or the support drips due to dew condensation and reaches the fixed portion between the battery assembly and the battery housing, the normally insulated battery pack and the battery housing may be conducted via the water droplet to cause a short circuit.

In view of the above problems, an object of the present invention is to provide an on-vehicle battery pack and a battery assembly having high safety regardless of a use environment.

### Solution to Problem

A battery pack according to the present invention is a battery pack in which a battery assembly is housed in a battery housing made of a metal, in which, when three coordinate axis directions in a three-dimensional orthogonal coordinate system are defined as an up-down direction, a lamination direction of the battery assembly, and a width direction of the battery assembly, respectively, a bottom portion of the battery housing includes: first fixing portions that are disposed in a region of an inner surface of the bottom portion, the region facing a lower surface of the battery assembly, and that fix the battery assembly upward, a partitioning portion that partitions the inner surface of the bottom portion into a plurality of regions, and an insulating portion that insulates at least a region on a central side of the bottom portion among the plurality of partitioned regions, the battery assembly includes: a laminated body which is formed by alternately laminating secondary batteries and spacers such that the secondary batteries are located at both ends thereof, and end spacers disposed at both the ends of the laminated body respectively, second fixing portions for fixing the battery assembly downward are provided on the lower surface of the battery assembly in the vicinity of both the ends of the battery assembly, the first fixing portions and the second fixing portions are provided to face each other so as to be coaxial, a bottom portion of the spacer extends in the lamination direction of the battery assembly so as to cover a lower surface of one of adjacent secondary batteries, the spacer and the end spacer have the following (1) or (2): (1) a bottom portion of the end spacer extends in the lamination direction of the battery assembly so as to further cover a lower surface of the bottom portion of the spacer, and an upper surface of the bottom portion of the end spacer and the lower surface of the bottom portion of the spacer face each other in the up-down direction, and (2) the bottom portion of the end spacer extends in the lamination direction of the battery assembly so as to cover a lower surface of one of adjacent secondary batteries, the bottom portion of the spacer extends in the lamination direction of the battery assembly so as to further cover the lower surface of the bottom portion of the end spacer, and the upper surface of the bottom portion of the spacer and the lower surface of the bottom portion of the end spacer face each other in the up-down direction, a protrusion protruding toward a central side of the lower surface of the battery assembly is formed on the bottom portion of the end spacer in the lamination direction of the battery assembly, and a distal end of the protrusion is disposed closer to the central side of the lower surface of the battery assembly than an installation site of the partitioning portion in the lamination direction of the battery assembly.

Further, a battery assembly according to the present invention is a battery assembly incorporated in a battery pack, including: a laminated body which is formed by alternately laminating secondary batteries and spacers such that the secondary batteries are located at both ends thereof; and end spacers disposed at both the ends of the laminated body respectively, in which, when three coordinate axis directions in a three-dimensional orthogonal coordinate system are defined as an up-down direction, a lamination direction of the battery assembly, and a width direction of the battery assembly, respectively, fixing portions for fixing the battery assembly downward are provided on a lower surface of the battery assembly in the vicinity of both ends of the battery assembly, a bottom portion of the spacer extends in the lamination direction of the battery assembly so as to cover a lower surface of one of secondary batteries, the spacer and the end spacer have the following (1) or (2):
(1) a bottom portion of the end spacer extends in the lamination direction of the battery assembly so as to further cover a lower surface of the bottom portion of the spacer, and an upper surface of the bottom portion of the end spacer.and the lower surface of the bottom portion of the spacer face each other in the up-down direction, and
(2) the bottom portion of the end spacer extends in the lamination direction of the battery assembly so as to cover a lower surface of one of adjacent secondary batteries, the bottom portion of the spacer extends in the lamination direction of the battery assembly so as to further cover the lower surface of the bottom portion of the end spacer, and the upper surface of the bottom portion of the spacer and the lower surface of the bottom portion of the end spacer face each other in the up-down direction, and a protrusion protruding toward a central side of the lower surface of the battery assembly is formed on the bottom portion of the end spacer in the lamination direction of the battery assembly, and a distal end of the protrusion is disposed closer to the central side of the lower surface of the battery assembly than an installation site of the fixing portion, in the lamination direction of the battery assembly.

### Advantageous Effects of Invention

According to the present invention, it is possible to provide an on-vehicle battery pack and a battery assembly having high safety regardless of a use environment.

### Brief Description of Drawings

Fig. 1 is a perspective view illustrating an appearance of a battery pack according to an embodiment.
Fig. 2 is an exploded perspective view illustrating a configuration of the battery pack according to the embodiment.
Fig. 3 is a perspective view illustrating an appearance of a battery assembly according to the embodiment.
Fig. 4. is an exploded perspective view illustrating a configuration of the battery assembly according to the embodiment.
Fig. 5 is a schematic view illustrating a problem in the conventional technique.
Fig. 6 is a perspective view illustrating an appearance of a protrusion of the battery assembly according to the embodiment.
Fig. 7 is a schematic view illustrating a relative positional relationship of the protrusion of the battery assembly according to the embodiment.
Fig. 8 is a perspective view illustrating an appearance of an end spacer of the battery assembly according to the embodiment.
Fig. 9 is a perspective view illustrating an appearance of an end spacer of a battery assembly according to another embodiment.

### Description of Embodiments

In the following description, it is assumed that three coordinate axis directions in the three-dimensional orthogonal coordinate system are the up-down direction, the lamination direction of the battery assembly, and the width direction of the battery assembly, respectively. In the following description, it is assumed that the up-down direction is a vertical direction.

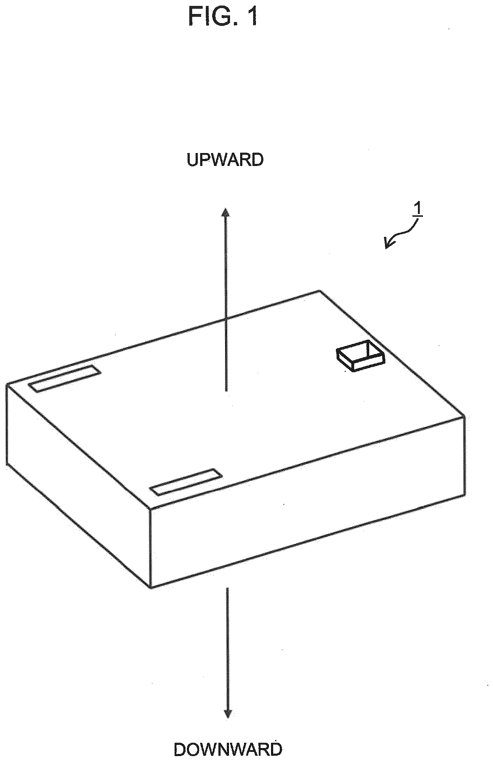

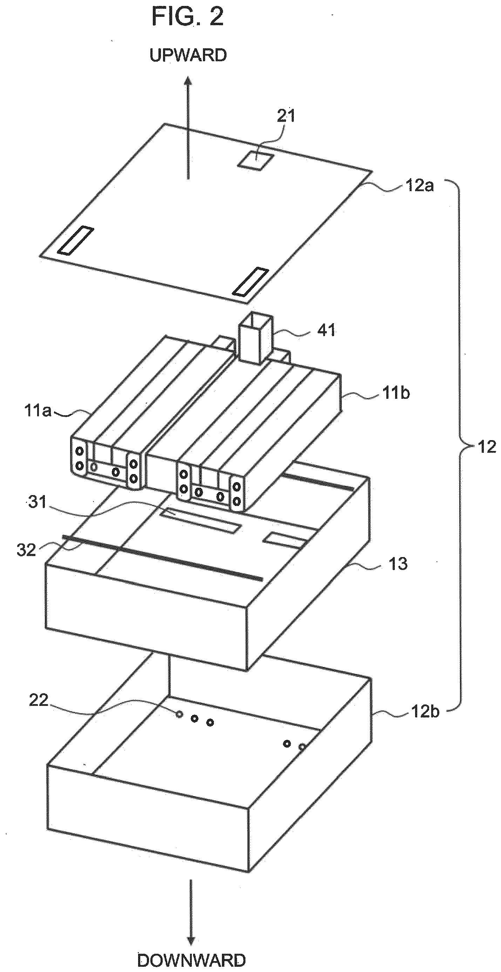

Fig. 1 is a perspective view illustrating an appearance of a battery pack 1 according to the present embodiment. Fig. 2 is an exploded perspective view illustrating a configuration of the battery pack 1. Figs. 1 and 2 illustrate a relative positional relationship of the battery pack 1 and each component thereof. The battery pack 1 illustrated in Fig. 1 is mounted as a power supply source on the above-described various electric vehicles (not illustrated).

As illustrated in Fig. 2, in the battery pack 1, a battery assembly 11 is housed in a hollow box-shaped battery housing 12 made of a metal. In Fig. 2, two battery assemblies (11a, 11b) are housed in the battery housing 12, but the number of battery assemblies 11 housed in the battery housing 12 can be appropriately changed.

As illustrated in Fig. 2, the battery housing 12 includes a battery housing body 12b made of a metal and having a bottomed rectangular tube shape, and a lid 12a made of a metal and having a flat plate shape. An insertion hole 21 for a cooling duct.41 is opened in the vicinity of an outer peripheral edge of the lid 12a. The insertion hole 21 for the cooling duct 41 is for inserting the cooling duct 41 for exhaust heat installed in a fixing member for fixing the battery assemblies (11a, 11b). Since the insertion hole 21 for the cooling duct 41 is provided in the lid 12a, when the lid 12a is closed in a state where the battery assemblies (11a, 11b) are housed inside the battery housing body 12b, the lid 12a can close an open end of the battery housing body 12b without interfering with the cooling duct 41. As a result, the inside of the battery housing 12 is sealed.

In the battery pack 1, the battery housing 12 and the battery assembly 11 are fixed to each other with various fixing members made of a metal such as conductive bolts and washers. Therefore, as illustrated in Fig. 2, holes 22 through which bolts (not illustrated) for assembling the battery assemblies (11a, 11b) upward are inserted are provided on the inner surface side of the bottom portion of the battery housing body 12b, as fixing portions (hereinafter, also referred to as a "first fixing portion") for fixing the battery housing 12 and the battery assembly 11, in the vicinity of both ends of the battery assembly 11 in the lamination direction in regions facing the lower surface of the battery assembly 11. That is, in Fig. 2, the holes 22 are provided such that an axial direction is the vertical direction. Note that a tap for directly fastening a bolt may be cut in the hole 22. In addition, a nut for fastening a bolt may be installed coaxially with the hole 22 on any one surface of the bottom portion of the battery housing body 12b. Furthermore, the holes 22 may or may not allow an internal space and an external space of the battery housing 12 to communicate with each other.

Note that the fixing portion for fixing the battery housing body 12b and the battery assembly 11 with various fixing members such as bolts and washers is also provided as, for example, a hole, a tap hole, or the like on the lower surface in the vicinity of both the ends of the battery assembly 11 in the lamination direction. In the following description, the fixing portion provided on the battery assembly 11 side is also referred to as a second fixing portion. The second fixing portion is installed to face the first fixing portion so as to be coaxial with the first fixing portion in a state where the battery assembly 11 is incorporated in the battery housing 12. As a result, in the vertical direction, the lower surface of the battery assembly 11 disposed above and the inner surface side of the bottom portion of the battery housing 12 disposed below are normally fixed.

That is, the holes 22 as the first fixing portions are disposed at positions coaxial with the second fixing portions in regions of the bottom portion of the battery housing 12 facing the lower surface of the battery assembly 11, in other words, in the vicinity of positions corresponding to both ends of the lower surface of the battery assembly 11 in the lamination direction. In Fig. 2, three holes 22 are provided at equal intervals in the width direction of the battery assemblies (11a, 11b) in regions of the bottom portion of the battery housing body 12b facing the lower surface of each battery assembly (11a, 11b).

Note that the specific configuration and shape of the first fixing portion provided at the bottom portion of the battery housing 12 and the second fixing portion provided on the lower surface of the battery assembly 11, and the member, arrangement, number, and the like of the installation destination can be appropriately changed.

On the inner surface side of the bottom portion of the battery housing 12, an insulating portion that insulates at least a region closer to a central side than an installation site of a partitioning portion 32 to be described later, of the inner surface of the bottom portion of the battery housing 12 is provided. In Fig. 2, an insulating case 13 is disposed inside the battery housing body 12b. The insulating case 13 is a bottomed rectangular cylindrical container made of a resin having an insulating property. The insulating case 13 illustrated in Fig. 2 is attached to the inside of the battery housing body 12b such that an outer surface of the insulating case is in close contact with an inner surface of the battery housing body 12b. As a result, most of the inner surface of the bottom portion of the battery housing 12 is insulated.

That is, the battery assembly 11 is incorporated in the battery housing 12 in a state of being housed inside the insulating case 13. Therefore, most of the lower surface of the battery assembly 11 and the inner surface of the bottom portion of the battery housing 12 are insulated by interposing the insulating case 13 therebetween.

The bottom portion of the insulating case 13 illustrated in Fig. 2 is provided with a substantially rectangular opening 31 having a long side in the width direction of the battery assemblies (11a, 11b). The opening 31 is formed by cutting out a partial region of the bottom portion of the insulating case 13 for the purpose of inserting a fixing member for fixing each battery assembly (11a, 11b) and the battery housing body 12b. Therefore, in a state where the insulating case 13 is attached inside the battery housing body 12b, a partial region of the bottom portion of the battery housing body 12b overlapping the opening 31 of the bottom portion of the insulating case 13, that is, a region in the vicinity of the holes 22 as the first fixing portions is not insulated, and the inner surface of the battery housing body 12b made of a metal having conductivity is exposed. Note that the specific position, size, range, shape, and the like of the opening 31 can be appropriately changed.

Further, on the inner surface side of the bottom portion of the insulating case 13 illustrated in Fig. 2, that is, on the inner surface side of the bottom portion of the battery housing 12, ridge shaped partitioning portions 32 rising from the inner surface are provided in the width direction of the battery assemblies (11a, 11b). The partitioning portions 32 partition the inner surface of the bottom portion of each adjacent battery housing 12 into a plurality of regions in the lamination direction of the battery assemblies (11a, 11b). Specifically, the partitioning portion 32 illustrated in Fig. 2 is installed by applying or bonding a sealing material made of a foamed resin having water repellency to the inner surface of the bottom portion of the insulating case 13. That is, the partitioning portion 32 has water repellency. In addition, the partitioning portion 32 illustrated in Fig. 2 extends in the width direction of the battery assembly 11 along a long side on the central side of the bottom portion of the insulating case 13, in other words, a long side closer to the center of the region facing the lower surface of the battery assembly 11, of two long sides of the substantially rectangular opening 31. As a result, the partitioning portion 32 is disposed in the battery housing 12 so as to partition a region including a ground contact surface of the battery assembly 11 and a region including the opening 31 on the inner surface of the bottom portion of the insulating case 13.

When the battery assembly 11 is attached to the battery housing 12, the lower surface of the battery assembly 11 abuts on the upper surface of the partitioning portion 32 and is pressed downward, and the partitioning portion 32 is deformed so as to be crushed in the vertical direction. Therefore, the upper surface of the partitioning portion 32 is in close contact with the lower surface of the battery assembly 11 in a state where the battery assembly 11 is attached to the battery housing 12. As a result, the partitioning portion 32 serves as a partition wall separating two spaces on both sides in the lamination direction of the battery assembly 11, that is, in the width direction of the partitioning portion 32.

In the present embodiment, the description has been given assuming that the partitioning portion 32 illustrated in Fig. 2 is a sealing material made of a foamed resin applied or bonded to the bottom portion of the insulating case 13. However, the partitioning portion 32 only needs to be any member that is fixed to the insulating portion and has water repellency. That is, the partitioning portion 32 may be a member made of a non-foaming resin or a member made of rubber. For example, the partitioning portion 32 may be a member made of ethylene propylene diene monomer (EPDM) rubber, a member made of other olefin resin such as thermoplastic polyolefin (TPO) or polyethylene (PE), or a member made of a urethane resin such as thermoplastic polyurethane (TPU). The partitioning portion 32 may be a member different from the insulating portion, which is fixed to the insulating portion by a method such as applying or bonding, or may be integrally molded with the insulating portion as the same member as the insulating portion.

In Fig. 2, the description has been given assuming that the partitioning portion 32 is a tape-shaped member provided in the width direction of the battery assemblies (11a, 11b). However, the arrangement shape of the partitioning portion 32 in the horizontal plane may be, for example, a linear shape, a planar shape, or a dotted shape.

In the present embodiment, it has been described that most of the inner surface side of the bottom portion of the battery housing 12 is insulated by attaching the insulating case 13 inside the battery housing body 12b. However, the insulating portion may not be provided so as to cover most of the inner surface of the bottom portion of the battery housing 12. For example, in the bottom portion of the battery housing 12, the insulating portion may be provided only in a partial region including at least a region closer to the central side than the site where the partitioning portion 32 is disposed, that is, a region facing the lower end portion of the battery assembly 11.

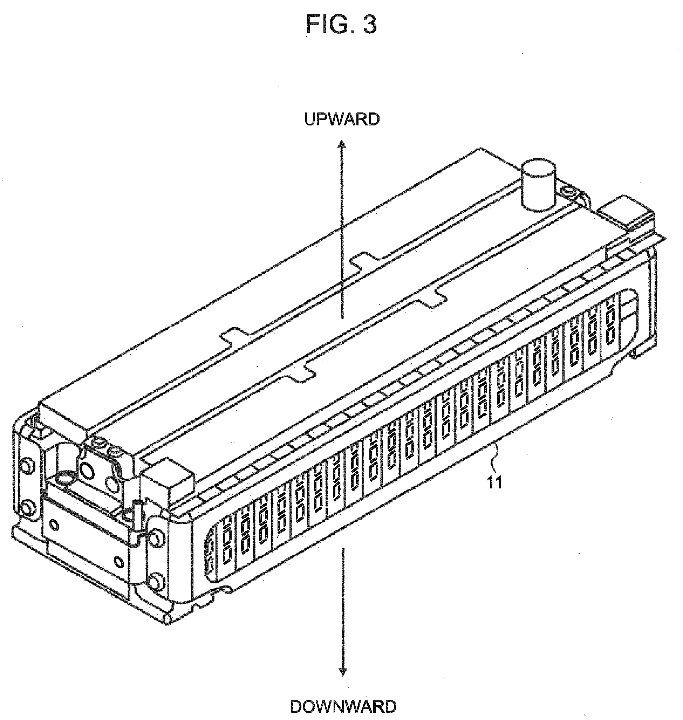

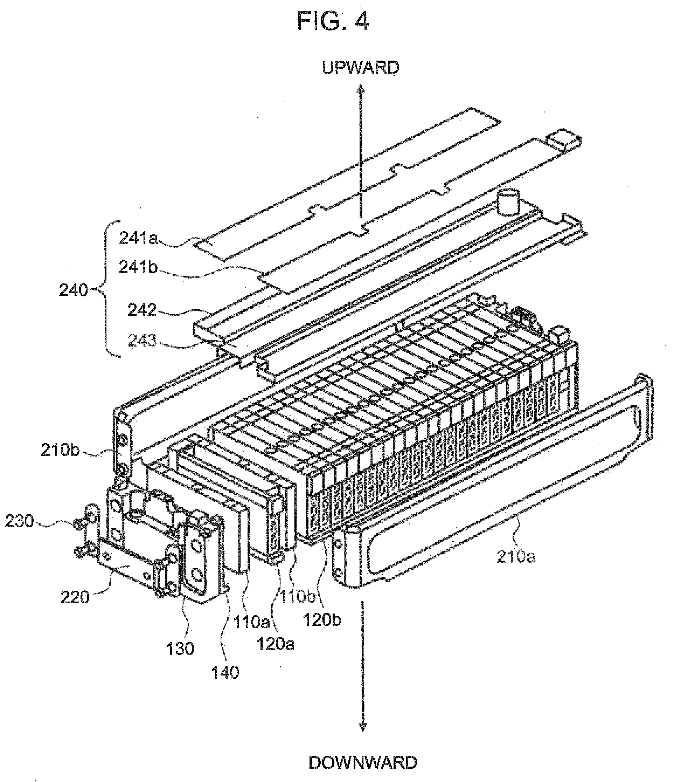

Next, the battery assembly 11 incorporated in the battery pack 1 will be described with reference to Figs. 3 and 4. Fig. 3 is a perspective view illustrating an appearance of the battery assembly 11. Fig. 4 is an exploded perspective view illustrating a configuration of the battery assembly 11. The battery assembly 11 illustrated in Figs. 3 and 4 corresponds to one of the two battery assemblies (11a, 11b) illustrated in Fig. 2.

As illustrated in Fig. 4, in the battery assembly 11, a plurality of secondary batteries 110a, 110b, ..., 110n (hereinafter, when they are collectively referred to or are not particularly distinguished, they are collectively referred to as "secondary battery 110") and one or more spacers 120a, 120b, ..., 120n (hereinafter, when they are collectively referred or not particularly distinguished, they are collectively referred to as "spacer 120") interposed between two secondary batteries 110 adjacent to each other are alternately laminated, and end spacers 130 are disposed at both ends respectively in the lamination direction.

End plates 220 made of a metal are fixed to the two end spacers 130 by bolts 230 from the outside of the battery assembly 11 in the lamination direction, respectively. Further, a fixing component (not illustrated) made of a metal covered with an insulating resin and provided with*a second fixing portion on the lower surface is also attached to the end spacer 130. That is, the battery assembly 11 is configured as described above, and thus has a structure in which the plurality of secondary batteries 110 laminated with the spacers 120 interposed therebetween are sandwiched by the two end spacers 130 disposed one by one at both ends in the lamination direction.

In addition, side rails (210a, 210b) made of a metal are attached to both sides of the battery assembly 11 in the width direction. Further, an upper structure 240 including members made of a metal such as a bus bar 242 for electrically coupling the plurality of secondary batteries 110, covers (241a, 241b) for protecting the bus bar 242, and a gas discharge duct 243 is attached above the battery assembly 11. These members also serve as exoskeletons for the battery assembly 11 to obtain sufficient rigidity.

The secondary battery 110 is a secondary battery in which an electrode assembly serving as both an energy storage element and a power generating element is sealed. The secondary battery 110 may be, for example, a lithium ion battery, a sodium ion battery, or a secondary battery using another type of material as a positive electrode active material. The secondary battery 110 may include an electrolytic solution or a solid electrolyte. That is, the secondary battery 110 may be an all-solid-state battery. Of course, the secondary battery 110 may be a nickel-metal hydride battery.

When the secondary battery 110 is a lithium ion battery, the positive electrode material may be various lithium alloys such as lithium cobalt oxide (LiCoO₂), lithium manganese oxide (LiMn₂O₄), lithium nickel oxide (LiNiO₂), and lithium iron phosphate (LiFePO₄), a lithium alloy such as so-called ternary lithium (LiNiCoMnO₂) and NCA-based lithium (LiNiCoAlO₂), or a lithium metal.

The spacer 120 is a component made of, for example, an insulating resin. One spacer 120 is interposed between two adjacent secondary batteries 110. As a result, the secondary batteries 110 ensure appropriate insulation distances from other adjacent secondary batteries 110 with the spacers 120 interposed therebetween. Therefore, a thickness of the spacer 120, that is, a dimension of each spacer 120 in the lamination direction of the battery assembly 11 only needs to ensure the appropriate insulation distance between two adjacent secondary batteries 110. Therefore, the spacer 120 may be made of, for example, an aluminum alloy whose surface is covered with an oxide film by alumite processing.

In addition, the bottom portion of the surface of the spacer 120 on one side in the lamination direction of the battery assembly 11 extends in the lamination direction of the battery assembly 11 so as to cover the lower surface of one of the adjacent secondary batteries 110. That is, the bottom portion of the spacer 120 has an upper surface facing the lower surface of the secondary battery 110. Further, the upper surface of the bottom portion of the spacer 120 also has a facing site with the lower surface of the bottom portion of another adjacent spacer 120 with the secondary battery 110 interposed therebetween. That is, the upper surface of the bottom portion of the spacer 120 and the lower surface of the bottom portion of another adjacent spacer 120 face each other in the vertical direction.

The bottom portion of the surface of the spacer 120 on the other side in the lamination direction of the battery assembly 11 extends in the lamination direction of the battery assembly 11 so as to cover the lower surface of the adjacent secondary battery 110 on the opposite side. That is, the bottom portion of the spacer 120 has the upper surface facing the lower surface of the secondary battery 110. Further, the lower surface of the bottom portion of the spacer 120 also has a facing site with respect to the upper surface of the bottom portion of another adjacent spacer 120. That is, the lower surface of the bottom portion of the spacer 120 and the upper surface of the bottom portion of another adjacent spacer 120 face each other in the vertical direction.

The end spacer 130 is also a component made of, for example, an insulating resin. The end spacers 130 are attached respectively to both ends of the plurality of secondary batteries 110 in the lamination direction laminated with the spacers 120 interposed therebetween. As a result, an insulation distance between each of the secondary batteries 110 disposed at both ends and the end plate 220, the fixing component, or the like made of a metal attached to each of the end spacers 130 can be appropriately ensured. That is, the thickness of the end spacer 130, that is, the dimension of each end spacer 130 in the lamination direction of the battery assembly 11 may be any thickness as long as an appropriate insulation distance is ensured between these components made of a metal and the adjacent secondary batteries 110. Therefore, the end spacer 130 may be made of, for example, an aluminum alloy whose surface is covered with an oxide film by alumite processing.

A part of the spacer 120 and the end spacer 130 is interposed between the side surface of each secondary battery 110 and the inner side surface of the side rails (210a, 210b) disposed on both sides of the battery assembly 11 in the width direction to ensure an appropriate insulation distance.

The bottom portion of the end spacer 130 disposed at the end on one side in the lamination direction of the battery assembly 11 extends in the lamination direction of the battery assembly 11 so as to further cover the lower surface of the bottom portion of the spacer 120 covering the lower surface of the adjacent secondary battery 110. That is, the bottom portion of the end spacer 130 has an upper surface facing the lower surface of the bottom portion of the spacer 120. That is, the upper surface of the bottom portion of the end spacer 130 and the lower surface of the bottom portion of the spacer 120 face each other in the vertical direction.

The bottom portion of the end spacer 130 disposed at an end of the other side of the one side extends in the lamination direction of the battery assemblies 11 so as to cover the lower surface of the adjacent secondary battery 110. The bottom portion of another adjacent spacer 120 extends in the lamination direction of the battery assembly 11 so as to further cover the lower surface of the bottom portion of the end spacer 130. That is, the bottom portion of the end spacer 130 has a lower surface facing the upper surface of the bottom portion of the spacer 120. That is, the lower surface of the bottom portion of the end spacer 130 and the upper surface of the bottom portion of the spacer 120 face each other in the vertical direction.

A facing site (to be described in detail later) between the upper surface of the bottom portion of the end spacer 130 and the lower surface of the bottom portion of the spacer 120 is formed over the entire region of the battery assembly 11 in the width direction. The partitioning portion 32 is provided below the facing site. That is, the facing site and the partitioning portion 32 are disposed substantially in parallel. The upper end surface of the partitioning portion 32 is in close contact with the lower end surfaces of the spacer 120 and the end spacer 130.

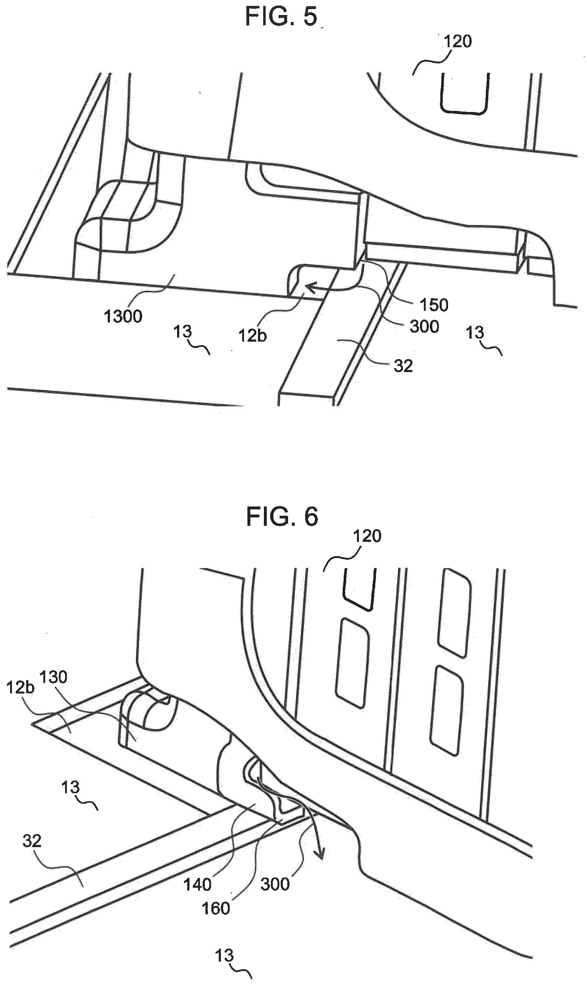

Meanwhile, as described above, dew condensation may occur on the surfaces of the members made of a metal such as the battery housing 12 and the side rails 210, and water droplets may adhere to the surfaces and hang downward. A problem occurring in such a case in the battery pack of the conventional technique is illustrated in Fig. 5. Fig. 5 is a schematic view illustrating the problem in the conventional technique. As exemplified in Fig. 5, in the battery pack of the conventional technique, condensed water 300 that has become water droplets descends along a gap between a secondary battery 110 and the spacer 120 or an end spacer 1300, reaches the lower end of the battery assembly, and then drops onto the bottom portion of the battery housing body 12b.

The configuration of the battery pack of the conventional technique is substantially the same as the configuration of the battery pack 1 of the present embodiment described above. That is, also in the battery pack of the conventional technique, most of the inner surface of the bottom portion of the battery housing body 12b is insulated by the insulating case 13. In addition, on the inner surface side of the bottom portion of the battery housing body 12b, as illustrated in Fig. 5, a ridge shaped partitioning portion 32 serving as a partition wall is installed in the width direction of the battery assembly. Therefore, on the inner surface of the bottom portion of the battery housing body 12b, there are two types of regions having different properties from each other with the arrangement site of the partitioning portion 32 as a boundary. The entire region closer to the central side than the arrangement site of the partitioning portion 32 is insulated by the insulating case 13. On the other hand, a region overlapping the opening 31 of the insulating case 13 exists in a region closer to the outer edge side than the arrangement site of the partitioning portion 32. In a region overlapping the opening 31 of the insulating case 13, an inner surface of the battery housing body 12b made of a metal having conductivity is exposed. In a region overlapping the opening 31 of the insulating case 13, the holes 22 as the first fixing portions for fixing the battery assembly and the battery housing 12 are disposed. That is, the battery pack of the conventional technique has a problem that when the condensed water 300 drops through a facing site 150 between the upper surface of the bottom portion of the end spacer 1300 and the lower surface of the bottom portion of the spacer 120, for example, to a non-insulated portion existing in the region closer to the outer edge side than the arrangement site of the partitioning portion 32, the normally insulated battery assembly and the battery housing 12 are conducted via the condensed water 300, and a short circuit may occur.

Therefore, in the battery pack 1 of the present embodiment, as illustrated in Fig. 4, a protrusion 140 protruding toward the central side of the lower surface of the battery assembly 11 is formed on the bottom portion of the end spacer 130 of the battery assembly 11 in the lamination direction of the battery assembly 11.

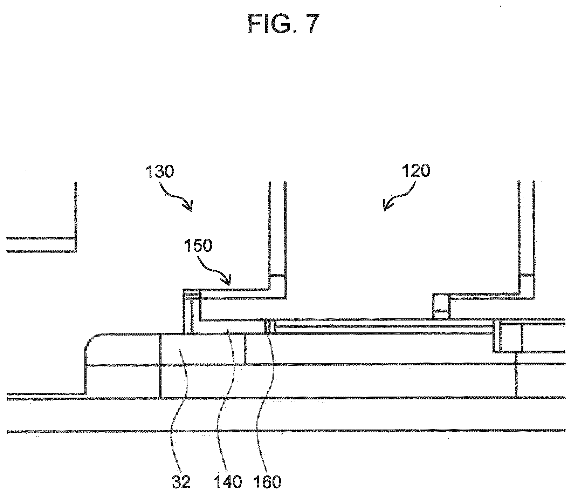

Figs. 6 and 7 are schematic views illustrating an outline.of the protrusion 140 of the battery assembly 11 according to the present embodiment. Fig. 6 is a perspective view illustrating an appearance of the protrusion 140. Fig. 7 is a side view schematically illustrating a relative positional relationship of the protrusion 140. As illustrated in Fig. 6, the condensed water 300 that has reached the bottom portion of the battery assembly 11 through the facing site 150 between the upper surface of the bottom portion of the end spacer 130 and the lower surface of the bottom portion of the spacer 120 further runs along the surface of the protrusion 140 whose base end is disposed below the facing site 150, and drops downward from a distal end 160 of the protrusion 140. The lower end surface of the protrusion 140 is disposed in contact with the upper end surface of the partitioning portion 32. As illustrated in Fig. 7, the distal end 160 of the protrusion 140 is disposed above the insulating region closer to the central.side than the installation site of the partitioning portion 32, in the bottom portion of the battery housing body 12b, in the lamination direction of the battery assembly 11. Therefore, the condensed water 300 drops into the insulating region. That is, in the battery pack 1 of the present embodiment, since the protrusion 140 is provided on the lower end side of the end spacer 130, it is possible to reliably guide the dropped condensed water 300 to the insulating region closer to the central side than the arrangement site of the partitioning portion 32, in the bottom portion of the battery housing body 12b in the lamination direction of the battery assembly 11. As a result, a short circuit caused by the condensed water 300 dropping onto the non-insulating region is reliably prevented.

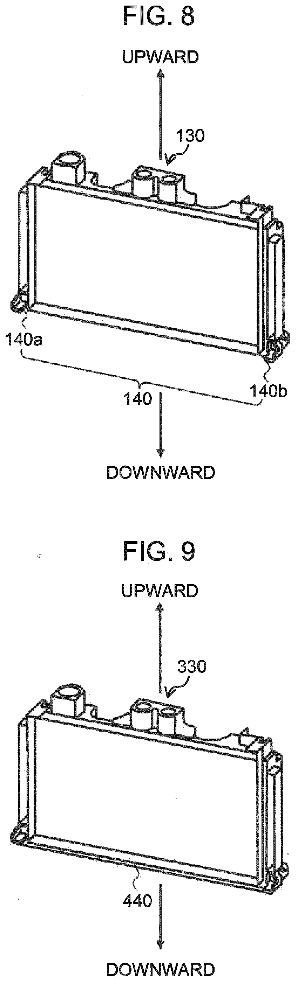

Fig. 8 is a perspective view illustrating an appearance of the end spacer 130 of the battery assembly 11 according to the present embodiment. As illustrated in Fig. 8, the protrusion 140 is integrally molded on the lower side of the end spacer 130 made of an insulating resin. In Fig. 8, one pair of protrusions (140a, 140b) are provided on each of both sides of the end spacer 130 in the width direction.

As illustrated in Figs. 6 and 8, the protrusion 140 has a longitudinal cross-sectional shape in the lamination direction of the battery assembly 11 formed into a tapered shape in which the thickness in the vertical direction decreases toward the distal end 160. The protrusion 140 has a substantially L-shaped cross-sectional shape in a longitudinal cross section of the battery assembly 11 in the width direction. That is, the protrusion 140 includes a substantially horizontal bottom portion extending in the lamination direction of the battery assembly 11 and a substantially vertical outer wall portion erected upward from one edge of the bottom portion. As a result, since the inside of the space of the protrusion 140 substantially defined by the bottom portion, the outer wall portion, and the side wall portion facing the outer wall portion becomes a passage of the condensed water 300, the condensed water 300 can be reliably guided from the base end side to the distal end 160 side.

In the present embodiment, it has been described that the longitudinalcross section of the protrusion 140 has a substantially L-shape in the width direction of the battery assembly 11 as illustrated in Figs. 6 and 8. However, the specific longitudinal cross-sectional shape of the protrusion 140 in the width direction of the battery assembly 11 may be any shape as long as it can reliably guide the condensed water 300 from the base end side to the distal end 160 side. For example, the longitudinal cross section of the protrusion in the width direction of the battery assembly may be substantially U-shaped. For example, the protrusion may be formed in a hollow cylindrical shape having a longitudinal cross-sectional shape such as a substantially annular shape, a substantially elliptical annular shape, or a substantially polygonal annular shape in the width direction of the battery assembly. Further, the protrusion may be formed as, for example, a solid member having a substantially polygonal longitudinal cross-sectional shape in the width direction of the battery assembly.

Further, it is sufficient that the protrusion 140 can reliably guide the condensed water 300 dropped from the distal end 160 to the insulating region closer to the central side than the arrangement site of the partitioning portion 32, in the bottom portion of the battery housing body 12b. That is, specific dimensions of the protrusion 140 such as the thicknesses of the bottom portion and the outer wall portion and the length of the protrusion 140 in the lamination direction of the battery assembly 11 may be arbitrarily set as long as the object can be achieved.

In the present embodiment, it has been described that the protrusion 140 is integrally molded with the end spacer 130 made of a resin. However, the protrusion 140 may be installed by attaching another member to the end spacer 130. The entire protrusion 140 may not be made of a resin. That is, at least a portion of the surface of the protrusion 140 that comes into contact with the condensed water 300 only needs to be covered with a resin.

In the present embodiment, as illustrated in Fig. 8, the description has been given assuming that one pair of protrusions (140a, 140b) are provided on each side of the end spacer 130 in the width direction. However, for example, as illustrated in Fig. 9, an end spacer 330 may include a protrusion 440 formed so as to cover the entire region on the lower side. In this case, the bottom portion of the protrusion 440 may be formed over the entire region of the end spacer 330 in the width direction. As a result, since the protrusion 440 is disposed above the partitioning portion 32 in the entire region of the battery assembly in the width direction, the .condensed water 300 can be reliably guided to the insulating region closer to the central side than the arrangement site of the partitioning portion 32, in the bottom portion of the battery housing body 12b.

In the present embodiment, it has been described that the protrusion 140 is provided on the end spacer 130. However, in addition to or instead of the protrusion 140 provided on the end spacer 130, a second protrusion different from the protrusion 140 may be provided on other members such as the spacer 120, the secondary battery 110, the end plate 220, and the side rail 210. In this case, the second protrusion may be integrally molded with these members, or may be formed separately from these members and attached. For example, when the second protrusion is formed on the spacer, the second protrusion may be provided such that the distal end is disposed on the central side of the lower surface of the battery assembly with respect to a facing site formed by vertically overlapping the upper surface of the bottom portion of the spacer and the lower surface of the bottom portion of another adjacent spacer in the lamination direction of the battery assembly. In such a case, it is not necessary to install the second protrusion on the bottom portion of another adjacent spacer. That is, in this case, the second protrusion may be provided only in some of the spacers. As a result, for example, even in a case where the bottom portion of the insulating case 13 is damaged, the surface of the battery housing body 12b made of a metal is exposed from the damaged site, and the condensed water 300 drops onto the exposed surface of the battery housing body 12b, a short circuit between the battery assembly and the battery housing 12 can be prevented. It should be noted that which spacer the second protrusion is to be installed may be appropriately determined.

In a case where the end spacer 130 is provided with the protrusion 140 or a member such as the spacer 120, the secondary battery 110, the end plate 220, or the side rail 210 is provided with the second protrusion, it is preferable that the surface of the installation site of the protrusion 140 or the second protrusion is covered with a resin. The resin is preferably an insulating resin having water repellency. This makes it possible to suppress the occurrence of dew condensation on the surfaces of the protrusion 140 and the second protrusion.

In the insulating portion, for example, a groove, a tube, or a combination thereof may be integrally or separately formed in a region disposed below the distal end 160 of the protrusion 140. As a result, the condensed water 300 dropped from the distal end 160 of the protrusion 140 is prevented from staying on the surface of the insulating portion, and the condensed water 300 can be appropriately drained.

In the present embodiment, as illustrated in Figs. 5 and 6, the description has been given assuming that the partitioning portion 32 is a ridge-shaped member installed by applying or bonding a water-repellent sealing material made of a foamed resin to the inner surface of the bottom portion of the insulating case 13. However, the partitioning portion may be provided by, for example, a step formed on the battery housing body or the bottom portion of the insulating case housed in the battery housing body. In this case, for example, the step may be provided by forming the bottom portion of the battery housing so that the central side is lower than the arrangement site of the fixing portion in the lamination direction of the battery assembly. As a result, the condensed water 300 dropped in the vicinity of the non-insulating region where the holes 22 as the first fixing portion are disposed flows to a lower region, whereby a short circuit caused by the dropping of the condensed water 300 to the non-insulating region can be prevented.

According to the embodiment of the present invention described above, the following operational effects are obtained.
(1) A battery pack 1 is a battery pack in which a battery assembly 11 is housed in a battery housing 12 made of a metal, in which, when three coordinate axis directions in a three-dimensional orthogonal coordinate system are defined as an up-down direction, a lamination direction of the battery assembly 11, and a width direction of the battery assembly 11, respectively, a bottom portion of the battery housing 12 includes:,holes 22 as first fixing portions that are disposed in a region of an inner surface of the bottom portion, the region facing a lower surface of the battery assembly 11, and that fix the battery assembly 11 upward, a partitioning portion 32 that partitions the inner surface of the bottom portion into a plurality of regions, and an insulating portion that insulates at least a region on a central side of the bottom portion among the plurality of partitioned regions, the battery assembly 11 includes: a laminated body which is formed by alternately laminating secondary batteries 110 and spacers 120 such that the secondary batteries 110 are located at both ends thereof, and end spacers 130 disposed at both the ends of the laminated body respectively, second fixing portions for fixing the battery assembly 11 downward are provided on the lower surface of the battery assembly 11 in the vicinity of both the ends of the battery assembly 11, the holes 22 as the first fixing portions and the second fixing portions are provided to face each other so as to be coaxial, a bottom portion of the spacer 120 extends in the lamination direction of the battery assembly 11 so as to cover a lower surface of one of adjacent secondary batteries 110, the spacer 120 and the end spacer 130 have the following (1) or (2): (1) a bottom portion of the end spacer 130 extends in the lamination direction of the battery assembly 11 so as to further cover a lower surface of the bottom portion of the spacer 120, and an upper surface of the bottom portion of the end spacer 130 and the lower surface of the bottom portion of the spacer 120 face each other in the up-down direction, and (2) the bottom portion of the end spacer 130 extends in the lamination direction of the battery assembly 11 so as to cover a lower surface of one of adjacent secondary batteries 110, the bottom portion of the spacer 120 extends in the lamination direction of the battery assembly 11 so as to further cover the lower surface of the bottom portion of the end spacer 130, and the upper surface of the bottom portion of the spacer 120 and the lower surface of the bottom portion of the end spacer 130 face each other in the up-down direction, a protrusion 140 protruding toward a central side of the lower surface of the battery assembly 11 is formed on the bottom portion of the end spacer 130 in the lamination direction of the battery assembly 11, and a distal end of the protrusion 140 is disposed closer to the central side of the lower surface of the battery assembly 11 than an installation site of the partitioning portion 32 in the lamination direction of the battery assembly 11. In this way, it is possible to reliably drop the condensed water 300 onto the insulating portion and to prevent a short circuit caused by the condensed water 300 dropping onto the non-insulating region.
(2) The partitioning portion 32 is formed by disposing a sealing material on an insulating portion. In this way, the dropped condensed water 300 can be effectively stopped on the insulating portion.
(3) The partitioning portion 32 may be integrally molded with the insulating portion using the same member as the insulating portion., In this case, the battery pack 1 can be easily manufactured.
(4) The partitioning portion 32 may be provided by a step formed on the bottom portion of the battery housing. In this case, the step may be provided by forming the bottom portion of the battery housing so that the central side is lower than the arrangement site of the holes 22 as the first fixing portions in the lamination direction of the battery assembly 11. In this case, the condensed water 300 dropped in the vicinity of the non-insulating region where the holes 22 as the first fixing portion are disposed flows to a lower region, whereby a short circuit caused by the condensed water 300 dropping onto the non-insulating region can be prevented.
(5) A passage for the condensed water 300 dropped is formed from the facing site 150 between the upper surface of the bottom portion of the end spacer 130 and the lower surface of the bottom portion of the spacer 120 to the distal end 160 of the protrusion 140. In this way, the dropped condensed water 300 can be effectively guided downward.
(6) The battery assembly 11 may further include side rails 210 attached to both sides in the width direction and an end plate 220 attached to the outside of the end spacer 130 in the lamination direction. In this case, the second protrusion protruding in the lamination direction of the battery assembly may be integrally or separately formed on the bottom portion of at least one of the spacer, the side rail, the end plate, and the secondary battery. In this case, it is possible to drop the condensed water 300 downward more effectively.
(7) The second protrusion may be formed on the bottom portion of one spacer, one main surface of the bottom portion of the spacer on which the second protrusion is formed and one main surface of the bottom portion of another spacer 120 adjacent to the spacer with the secondary battery 110 interposed therebetween may form a facing site where the surfaces face each other in the up-down direction, and the second protrusion may be disposed below the facing site. In this case, for example, even in a case where the bottom portion of the insulating case 13 is damaged, the surface of the battery housing 12 made of a metal is exposed from the damaged site, and the condensed water 300 drops onto the exposed surface of the battery housing 12, a short circuit between the battery assembly and the battery housing 12 can be prevented.
(8) The protrusion 140 has a longitudinal cross-sectional shape in the lamination direction of the battery assembly 11 formed into a tapered shape in which the thickness in the up-down direction decreases toward the distal end 160. In this way, the condensed water 300 can be reliably guided to the distal end 160 side.
(9) The protrusion 140 includes a substantially horizontal bottom portion extending in the lamination direction of the battery assembly 11 and a substantially vertical outer wall portion erected upward from one edge of the bottom portion. In this way, even when the amount of the condensed water 300 is large, it is possible to reliably guide the condensed water to the distal end 160 side.
(10) The base end of the protrusion 140 is disposed below the facing site 150 between the upper surface of the bottom portion of the end spacer 130 and the lower surface of the bottom portion of the spacer 120. In this way, the condensed water 300 that has reached the facing site 150 can be effectively guided to the distal end 160 side.
(11) A battery assembly 11 is a battery assembly incorporated in a battery pack 1, including: a laminated body which is formed by alternately laminating secondary batteries 110 and spacers 120 such that the secondary batteries 110 are located at both.ends thereof; and end spacers 130 disposed at both the ends of the laminated body respectively, in which, when three coordinate axis directions in a three-dimensional orthogonal coordinate system are defined as an up-down direction, a lamination direction of the battery assembly 11, and a width direction of the battery assembly 11, respectively, fixing portions for fixing the battery assembly 11 downward are provided on a lower surface of the battery assembly 11 in the vicinity of both ends of the battery assembly 11, a bottom portion of the spacer 120 extends in the lamination direction, of the battery assembly 11 so as to cover a lower surface of one of adjacent secondary batteries 110; the spacer 120 and the end spacer 130 have the following (1) or (2): (1) a bottom portion of the end spacer 130 extends in the lamination direction of the battery assembly 11 so as to further cover a lower surface of the bottom portion of the spacer 120, and an upper surface of the bottom portion of the end spacer 130 and the lower surface of the bottom portion of the spacer 120 face each other in the up-down direction, and (2) the bottom portion of the end spacer 130 extends in the lamination direction of the battery assembly 11 so as to cover a lower surface of one of adjacent secondary batteries 110, the bottom portion of the spacer 120 extends in the lamination direction of the battery assembly 11 so as to further cover the lower surface of the bottom portion of the end spacer 130, and the upper surface of the bottom portion of the spacer 120 and the lower surface of the bottom portion of the end spacer 130 face each other in the up-down direction, and a protrusion 140 protruding toward a central side of the lower surface of the battery assembly 11 is formed on the bottom portion of the end spacer 130 in the lamination direction of the battery assembly 11, and a distal end 160 of the protrusion 140 is disposed closer to the central side of the lower surface of the battery assembly 11 than an installation site of the fixing portion in the lamination direction of the battery assembly 11. In this way, it is possible to prevent a short circuit caused by the condensed water 300 dropping onto the non-insulating region below the fixing portion. Further, the end spacer 130 and the end spacer 1300 of the conventional technique are different from each other only in the presence or absence of the protrusion 140. Therefore, in order to manufacture the battery assembly 11, it is sufficient to change the end spacer 1300 of the battery assembly of the conventional technique to the end spacer 130. That is, the battery assembly 11 can be easily manufactured while suppressing an increase in manufacturing cost.
(12) One protrusion 140 is provided at each of both the ends of the end spacer 130 in the width direction. In this way, the condensed water 300 can be efficiently guided from both ends of the end spacer 130 in the width direction to the insulating region closer to the central side than the arrangement site of the partitioning portion 32, in the bottom portion of the battery housing 12.
(13) The sealing material may be disposed on the insulating portion so as to be a linear shape, a planar shape, or a dotted shape in a substantially horizontal plane. In this case, the dropped condensed water 300 can be effectively stopped on the insulating portion. In particular, when the sealing material is linearly disposed on the insulating portion along the surface on which dew condensation is likely to occur, the condensed water 300 can be more effectively stopped on the insulating portion. On the other hand, when the sealing material is provided in a dotted shape or a linear shape on the insulating portion, the sealing material is easily disposed.
(14) The sealing material has water repellency. In this way, the dropped condensed water 300 can be effectively stopped on the insulating portion.
(15) The sealing material is a rubber component or a resin component fixed on the insulating portion. By using a component that is easily elastically deformed as a sealing material, the sealing material is easily brought into close contact with another member that abuts.
(16) The surface of the installation site of the second protrusion may be covered with a resin. In this way, it is possible to suppress the occurrence of dew condensation on the surface of the second protrusion.
(17) The lower end surface of the protrusion 140 is disposed in contact with the upper end surface of the partitioning portion 32. In this way, the condensed water 300 can be reliably guided to the insulating portion.
(18) The protrusion 140 has a longitudinal cross-sectional shape of a substantially L-shape, a substantially U-shape, a substantially annular shape, a substantially elliptical annular shape, a substantially polygonal annular shape, or a substantially polygonal shape in the width direction of the battery assembly 11. In this way, even when the amount of the condensed water 300 is large, it is possible to reliably guide the condensed water to the distal end 160 side.
(19) A groove, a tube, or a combination thereof may be formed integrally or separately in a region of the insulating portion disposed below the distal end 160 of the protrusion 140. In this case, the condensed water 300 dropped from the distal end 160 of the protrusion 140 can be prevented from staying on the insulating portion, and the condensed water 300 can be effectively drained.
(20) The insulating portion is a container 13 that houses the battery assembly 11. In this way, the insulating portion can be easily provided on the inner surface of the battery housing 12.
(21) The bottom portion of the protrusion 440 may be formed over the entire region of the end spacer 330 in the width direction. In this case, the protrusion 440 is disposed above the partitioning portion 32 in the entire region of the battery assembly in the width direction. As a result, the condensed water 300 can be more reliably guided to the insulating region closer to the central side than the arrangement site of the partitioning portion 32, in the bottom portion of the battery housing 12.

It should be noted that the present invention is not limited to the above embodiment, and can be implemented by using arbitrary component without departing from the gist of the present invention.

The above embodiment and modifications are merely examples, and the present invention is not limited to these contents as long as the features of the invention are not impaired. Although various embodiment and modifications have been described above, the present invention is not limited to these contents. Other aspects conceivable within the scope of the technical idea of the present invention are also included within the scope of the present invention.

### Reference Signs List

1 Battery pack
11, 11a, 11b Battery assembly
12 Battery housing
12a Battery housing body
12b Lid
13 Insulating case
21 Insertion hole for cooling duct
22 Hole
31 Opening
32 Partitioning portion
41 Cooling duct
110, 110a, 110b Secondary battery
120, 120a, 120b Spacer
130, 330 End spacer
140, 140a, 140b, 440 Protrusion
150 Facing site
160 Distal end
210, 210a, 210b Side rail
220 End plate
230 Bolt
240 Upper structure
241a, 241b Bus bar cover
242 Bus bar
243 Gas discharge duct
300 Condensed water

## Claims

1. A battery pack in which a battery assembly is housed in a battery housing made of a metal,
wherein, when three coordinate axis directions in a three-dimensional orthogonal coordinate system are defined as an up-down direction, a lamination direction of the battery assembly, and a width direction of the battery assembly, respectively,
a bottom portion of the battery housing includes:
first fixing portions that are disposed in a region of an inner surface of the bottom portion, the region facing a lower surface of the battery assembly, and that fix the battery assembly upward,
a partitioning portion that partitions the inner surface of the bottom portion into a plurality of regions, and
an insulating portion that insulates at least a region on a central side of the bottom portion among the plurality of partitioned regions,
the battery assembly includes:
a laminated body which is formed by alternately laminating secondary batteries and spacers such that the secondary batteries are located at both ends thereof, and
end spacers disposed at both the ends of the laminated body respectively,
second fixing portions for fixing the battery assembly downward are provided on the lower surface of the battery assembly in the vicinity of both the ends of the battery assembly,
the first fixing portions and the second fixing portions are provided to face each other so as to be coaxial,
a bottom portion of the spacer extends in the lamination direction of the battery assembly so as to cover a lower surface of one of adjacent secondary batteries,
the spacer and the end spacer have the following (1) or (2):
(1) a bottom portion of the end spacer extends in the lamination direction of the battery assembly so as to further cover a lower surface of the bottom portion of the spacer, and an upper surface of the bottom portion of the end spacer and the lower surface of the bottom portion of the spacer face each other in the up-down direction, and
(2) the bottom portion of the end spacer extends in the lamination direction of the battery assembly so as to cover a lower surface of one of adjacent secondary batteries, the bottom portion of the spacer extends in the lamination direction of the battery assembly so as to further cover the lower surface of the bottom portion of the end spacer, and the upper surface of the bottom portion of the spacer and the lower surface of the bottom portion of the end spacer face each other in the up-down direction,
a protrusion protruding toward a central side of the lower surface of the battery assembly is formed on the bottom portion of the end spacer in the lamination direction of the battery assembly, and
a distal end of the protrusion is disposed closer to the central side of the lower surface of the battery assembly than an installation site of the partitioning portion in the lamination direction of the battery assembly.

2. The battery pack according to claim 1, wherein the partitioning portion is formed by disposing a sealing material on the insulating portion.

3. The battery pack according to claim 1, wherein the partitioning portion is integrally molded with the insulating portion with a same member as the insulating portion.

4. The battery pack according to claim 1, wherein the partitioning portion is provided by a step formed in the bottom portion of the battery housing, and the step is provided by forming the bottom portion of the battery housing so that a central side is lower than an arrangement site of the first fixing portion in the lamination direction of the battery assembly.

5. The battery pack according to claim 1, wherein a passage for condensed water dropped is formed from a facing site between the upper surface of the bottom portion of the end spacer and the lower surface of the bottom portion of the spacer to the distal end of the protrusion.

6. The battery pack according to claim 1, wherein
the battery assembly further includes:
side rails attached to both sides in the width direction, and
an end plate attached to an outer side of the end spacer in the lamination direction, and
a second protrusion protruding in the lamination direction of the battery assembly is integrally or separately formed on the bottom portion of at least one of the spacer, the side rail, the end plate, and the secondary battery.

7. The battery pack according to claim 6, wherein
the second protrusion is formed on a bottom portion of one spacer,
one main surface of the bottom portion of the spacer on which the second protrusion is formed and one main surface of a bottom portion of another spacer adjacent to the spacer with the secondary battery interposed therebetween form a facing site where the surfaces face each other in the up-down direction, and
the second protrusion is disposed below the facing site.

8. The battery pack according to claim 1, wherein the protrusion has a longitudinal cross-sectional shape in the lamination direction of the battery assembly formed into a tapered shape in which a thickness in the up-down direction decreases toward the distal end.

9. The battery pack according to claim 1, wherein the protrusion includes a substantially horizontal bottom portion extending in the lamination direction of the battery assembly, and a substantially vertical outer wall portion erected upward from one edge of the bottom portion.

10. The battery pack according to claim 1, wherein a base end of the protrusion is disposed below the facing site between the upper surface of the bottom portion of the end spacer and the lower surface of the bottom portion of the spacer.

11. A battery assembly incorporated in a battery pack, comprising:
a laminated body which is formed by alternately laminating secondary batteries and spacers such that the secondary batteries are located at both ends thereof; and
end spacers disposed at both the ends of the laminated body respectively, wherein
when three coordinate axis directions in a three-dimensional orthogonal coordinate system are defined as an up-down direction, a lamination direction of the battery assembly, and a width direction of the battery assembly, respectively,
fixing portions for fixing the battery assembly downward are provided on a lower surface of the battery assembly in the vicinity of both ends of the battery assembly,
a bottom portion of the spacer extends in the lamination direction of the battery assembly so as to cover a lower surface of one of adjacent secondary batteries,
the spacer and the end spacer have the following (1) or (2):
(1) a bottom portion of the end spacer extends in the lamination direction of the battery assembly so as to further cover a lower surface of the bottom portion of the spacer, and an upper surface of the bottom portion of the end spacer and the lower surface of the bottom portion of the spacer face each other in the up-down direction, and
(2) the bottom portion of the end spacer extends in the lamination direction of the battery assembly so as to cover a lower surface of one of adjacent secondary batteries, the bottom portion of the spacer extends in the lamination direction of the battery assembly so as to further cover the lower surface of the bottom portion of the end spacer, and the upper surface of the bottom portion of the spacer and the lower surface of the bottom portion of the end spacer face each other in the up-down direction, and
a protrusion protruding toward a central side of the lower surface of the battery assembly is formed on the bottom portion of the end spacer in the lamination direction of the battery assembly, and
a distal end of the protrusion is disposed closer to the central side of the lower surface of the battery assembly than an installation site of the fixing portion in the lamination direction of the battery assembly.

12. The battery assembly according to claim 11, wherein a passage for condensed water dropped is formed from a facing site between the upper surface of the bottom portion of the end spacer and the lower surface of the bottom portion of the spacer to the distal end of the protrusion.

13. The battery assembly according to claim 11, wherein
the battery assembly further includes:
side rails attached to both sides in the width direction, and
an end plate attached to an outer side of the end spacer in the lamination direction, and
a second protrusion protruding in the lamination direction of the battery assembly is integrally or separately formed on the bottom portion of at least one of the spacer, the side rail, the end plate, and the secondary battery.

14. The battery assembly according to claim 13, wherein
the second protrusion is formed on a bottom portion of one spacer,
one main surface of the bottom portion of the spacer on which the second protrusion is formed and one main surface of the bottom portion of another spacer adjacent to the spacer with the secondary battery interposed therebetween form a facing site where the surfaces face each other in the up-down direction, and
the second protrusion is disposed below the facing site.

15. The battery assembly according to claim 11, wherein the protrusion has a longitudinal cross-sectional shape in the lamination direction of the battery assembly formed into a tapered shape in which a thickness in the up-down direction decreases toward the distal end.

16. The battery assembly according to claim 11, wherein the protrusion includes a substantially horizontal bottom portion extending in the lamination direction of the battery assembly, and a substantially vertical outer wall portion erected upward from one edge of the bottom portion.

17. The battery assembly according to claim 11, wherein a base end of the protrusion is disposed below a facing site between the upper surface of the bottom portion of the end spacer and the lower surface of the bottom portion of the spacer.

18. The battery pack according to claim 1, wherein one protrusion.is provided at each of both the ends of the end spacer in the width direction.

19. The battery assembly according to claim 11, wherein one protrusion is provided at each of both the ends of the end spacer in the width direction.
